Europäisches Patentamt

European Patent Office

Office européen des brevets

(19)

(11) Numéro de publication : **0 202 193 B1**

# (12) FASCICULE DE BREVET EUROPEEN

(45) Date de publication du fascicule du brevet :
08.05.91 Bulletin 91/19

(51) Int. Cl.$^5$ : **A23L 2/40**, A23L 2/26,
A23L 2/38

(21) Numéro de dépôt : 86810080.1

(22) Date de dépôt : 13.02.86

(54) **Procédé pour la préparation d'une composition pulvérulente hydrosoluble non hygroscopique destinée à la préparation de boissons à dégagement gazeux prolongé.**

(30) Priorité : 19.04.85 CH 1695/85

(43) Date de publication de la demande :
20.11.86 Bulletin 86/47

(45) Mention de la délivrance du brevet :
08.05.91 Bulletin 91/19

(84) Etats contractants désignés :
AT BE CH DE FR GB IT LI LU NL SE

(56) Documents cités :
EP-A- 0 130 144
US-A- 3 667 962

(73) Titulaire : DRIDRINKS N.V.
De Ruyterkade 62
Curaçao N.A. (NL)

(72) Inventeur : Lavie, Louis
6, avenue Dapples
CH-1006 Lausanne (CH)

(74) Mandataire : Vuille, Roman et al
c/o KIRKER & Cie S.A. 14, rue du Mont-Blanc
Case Postale 872
CH-1211 Genève 1 (CH)

## Description

La présente invention a pour objet un procédé pour la préparation d'une composition pulvérulente, non hygroscopique, destinée à la préparation de boissons, nutritives ou non nutritives, à dégagement gazeux prolongé.

Le marché des boissons gazeuses, plus particulièrement celui des limonades gazeuses dites "soft drinks" ou "diet drinks", est en progression constante. Sur le plan industriel cependant, son développement se heurte au coût des transports et des manipulations relativement nombreuses d'un produit lourd et volumineux. On tente actuellement de résoudre de tels problèmes en dispersant à l'extrême les centres de production et à ne transporter que des extraits concentrés, à l'état sec ou liquide.

Dans les installations industrielles appropriées, ces extraits sont additionnés d'eau, le cas échéant, de sucre, puis de CO2 sous pression élevée, avant d'être conditionnés dans des récipients hermétiques, résistant à la pression, et de ce fait relativement lourds et encombrants. Le caractère "piquant" de ces boissons est alors assuré, entre autres, lors de la consommation, par le dégagement progressif de la dose de CO2 initialement dissoute.

On connaît également des extraits secs pulvérulents à base de bicarbonate de sodium et d'acides comestibles qui, additionnés d'eau juste avant consommation, permettent l'obtention de boissons gazeuses. De tels extraits, cependant, ne permettent pas une gazéification de la boisson comparable par sa durée et son "piquant" à celle résultant de la dissolution de CO2 sous pression. On constate en outre que dans de nombreux cas les ingrédients indispensables à l'effet organoleptique recherché, tels les acides phosphorique et citrique ou le bicarbonate de sodium par exemple, sont particulièrement hygroscopiques et compromettent de ce fait la stabilité des mélanges conditionnés.

Les industries chimiques et pharmaceutiques produisent et utilisent des polymères pour l'enrobage des médicaments. Certains de ces polymères peuvent convenir pour préserver les extraits secs contre les reprises d'humidité et pour contrôler partiellement la réaction entre les acides et les carbonates. N'ayant pas été conçus pour cet usage, ils présentent des inconvénients tels que la coloration des mousses ou des dépôts dans les verres. Le contrôle et l'uniformisation du dégagement de CO2 dans la boisson ne sont en outre que fort imparfaitement maîtrisés.

US-A-3.367 962 propose de disperser au sein d'une matrice à base de dextrines d'une part le bicarbonate de sodium, d'autre part l'acide comestible, qui une fois en présence d'eau réagiront pour libérer du $CO_2$ au sein de la boisson. Cette technique vise essentiellement à permettre la préparation d'une poudre stable au sein de laquelle les constituants actifs sont physiquement séparés l'un de l'autre. Elle conduit par contre à une dissolution très rapide des constituants en milieu aqueux et n'est donc pas à même d'assurer une libération prolongée du gaz carbonique ainsi dégagé.

L'inventeur a pour sa part déjà mis au point un procédé d'enrobage des constituants acides et basiques de telles compositions. Ce procédé a fait entretemps l'objet de la publication EP-A-0 130 144 et peut être succinctement présenté comme suit : on prépare premièrement une solution de sucre (saccharose et/ou caramel de sucre) dans laquelle on dissout un polysaccharide macromoléculaire hydrosoluble telle la gomme arabique ou la gomme adragante, puis on ajoute une certaine quantité d'alcool éthylique au mélange que l'on porte finalement à 50°C durant au moins une heure, dans un récipient étanche. Les liqueurs d'enrobage ainsi obtenues s'utilisent aussi bien pour l'enrobage des constituants acides ou basiques. Des mises en oeuvre de cette technique sont décrites plus avant.

La présente invention permet de surmonter avantageusement les difficultés exposées ci-dessus, en proposant un procédé de préparation d'une composition pulvérulente dont les constituants sont efficacement protégés contre toute reprise d'humidité et qui, une fois additionnée d'eau, permet la préparation d'une boisson gazeuse dont la gazéification, tant par sa durée que son "piquant", est tout à fait comparable à celle obtenue par le moyen des installations industrielles connues à ce jour.

L'invention est définie aux revendications ; elle a pour objet un procédé pour la préparation d'une composition pulvérulente hydrosoluble non hygroscopique destinée à la préparation de boissons à dégagement gazeux prolongé comprenant un premier constituant mélangé à un second constituant, réagissant l'un avec l'autre en présence d'eau pour donner un dégagement gazeux, caractérisé en ce que

a) on prépare une solution aqueuse exempte de saccharose ou d'un de ses dérivés d'un composé choisi parmi les polysaccharides ou mélanges de polysaccharides macromoléculaires d'origine végétale ou microbiologique, hydrosolubles mais insolubles ou seulement partiellement solubles dans les alcools, les composés de structure amino-acide, les polypeptides ou mélanges de polypeptides hydrosolubles, mais insolubles ou seulement partiellement solubles dans les alcools ;

b) on ajoute progressivement de l'alcool éthylique à la solution ci-dessus en quantités telles que le volume alcool éthylique introduit soit légèrement inférieur à celui provoquant l'apparition de micelles, de gels ou de flocons ;

c) on chauffe le mélange ainsi obtenu dans un récipient étanche durant au moins une heure à une température de l'ordre de 50°C ;

d) on imprègne ou enrobe séparément lesdits premier et second constituants à l'aide de la liqueur résultant de l'étape c) ;

e) on sèche ensuite séparément chacun des constituants ainsi imprégnés ou enrobés, puis

f) on mélange, en proportions prédéterminées, les constituants séchés et le cas échéant pulvérisés.

Parmi les polysaccharides hydrosolubles mais insolubles ou seulement partiellement solubles dans les alcools, on peut citer, à titre d'exemple, des polysaccharides d'origine végétale comme la gomme arabique et la gomme adragante, ou un polysaccharide d'origine microbiologique, la gomme xanthane.

Les polypeptides correspondant à la définition ci-dessus peuvent notamment comprendre des polypeptides polyhydroxylés ou non hydroxylés, le cas échéant porteurs d'autres groupes fonctionnels. Le poids moléculaire moyen desdits polypeptides est le plus généralement compris entre 20'000 et 120'000. A titre d'exemple de tels polypeptides, on peut citer les gélatines qui existent sous différents types en fonction de leurs préparations, ou l'albumine.

Le procédé selon l'invention comprend, à titre de premier constituant, un sel ou un mélange de sels d'acide carbonique, tel un carbonate ou un bicarbonate alcalin, un carbonate alcalino-terreux ou un sel d'acide carbonique et d'acide aminé.

Il comprend en outre, à titre de second constituant, un acide ou un mélange d'acides organiques, tel l'acide citrique, tartique, malique ou ascorbique, et/ou d'un acide minéral tel que l'acide phosphorique.

La composition de la liqueur d'enrobage peut être avantageusement adaptée à la nature des produits à imprégner et à l'effet recherché. En ce qui concerne les constituants acides, il suffit que l'imprégnation de ceux-ci permette d'obtenir une bonne protection des produits contre l'hygroscopie et un léger ralentissement de la dissolution pour stabiliser le pH en fonction de la durée de la réaction. En ce qui concerne les carbonates, il convient, en plus de la protection contre l'hygroscopie, d'assurer le contrôle de la réaction en fonction du temps de gazéification choisi.

Il a été remarqué que les liqueurs d'enrobage à base de polypeptides hydrosolubles, telle la gélatine par exemple, peuvent être avantageusement utilisées pour l'enrobage ou l'imprégnation des acides aussi bien que des carbonates.

Une fois mises en oeuvre conformément au procédé de l'invention, lesdites liqueurs présentent de nombreux avantages, principalement mis en évidence au niveau des produits terminés. Elles favorisent toutes deux l'agglomération des divers composants choisis, ce qui simplifie considérablement les opérations de dosage des divers produits, puis leur emballage. Elles constituent en outre un très bon support pour les parfums qui peuvent y être incorporés et assurent une excellente protection contre l'hygroscopicité des composants, permettant de ce fait une longue conservation.

L'application des liqueurs pour l'enrobage de chacun des constituants peut être avantageusement effectué à l'aide des techniques usuelles, telle la pulvérisation ou le procédé dit à lit fluidisé, par exemple.

A l'aide desdites liqueurs, on peut également procéder à l'imprégnation de chacun des constituants soit par mélange sous pression mécanique des produits et de la liqueur choisis, soit par dissolution, dans la quantité d'eau minimum nécessaire, des produits et de la liqueur choisis. Lors des opérations de mélange sous pression mécanique, à l'aide d'un mortier ou d'un moulin à boules par exemple, la liqueur peut être le cas échéant étendue d'eau pour favoriser l'imprégnation des composants pulvérulents.

De bons résultats ont été obtenus en imprégnant les divers constituants ou groupes de constituants à raison de 1,5 à 15% environ en poids de liqueur d'enrobage par rapport au poids total de mélange à l'état sec.

Si l'on désire ajouter d'autres ingrédients tels que colorants ou produits organoleptiques, par exemple du colorant caramel, des substances édulcorantes naturelles ou synthétiques, des huiles essentielles ou des extraits végétaux, ces produits sont répartis en fonction de leurs affinités avec l'un ou l'autre des éléments de la réaction. Chacun des deux groupes ainsi formés est soigneusement mélangé à sec, puis enrobé ou imprégné à l'aide de la liqueur.

Une fois les ingrédients choisis convenablement imprégnés, le produit résultant est alors soumis à dessication et, le cas échéant, réduit en poudre. La dessication peut être convenablement effectuée par chauffage modéré, de 15 à 30°C par exemple, sous vide partiel, par séchage sous vide poussé à basse température, par lyophilisation ou dans un courant d'air chaud, à 40°C par exemple. La dessication sera poursuivie de façon à abaisser la teneur en eau du produit imprégné jusqu'à un maximum de 0,5 à 1% en poids environ.

Si nécessaire, le produit résultant de la dessication est ensuite pulvérisé selon les techniques usuelles, le cas échéant stocké dans l'attente de son utilisation finale.

Les ingrédients sélectionnés peuvent être alors répartis en doses unitaires convenant, après simple addition d'eau, à la préparation de boissons gazeuses.

Illustration des mises en oeuvre de la technique antérieure

Exemple A

On a premièrement dissous 5 g de gélatine du commerce dans 50 g d'eau, par chauffage et agitation modérée à 40°C. Après dissolution de la gélatine, on a progressivement ajouté 45 g de sucre au mélange ci-dessus et poursuivi l'agitation jusqu'à unification.

Au sirop concentré limpide ainsi obtenu, on a ajouté goutte à goutte 8 g d'éthanol à 100%, et la liqueur ainsi obtenue a été finalement entreposée en vase clos, durant 1 heure à 50°C.

On a ensuite procédé à l'enrobage d'une portion de bicarbonate de sodium pulvérisé, en utilisant 10% en poids de la liqueur ci-dessus, le produit ainsi enrobé étant par la suite séché sur tamis durant 1 heure à 40°C.

On a d'autre part procédé à l'enrobage d'une portion d'acide tartrique pulvérisé, en utilisant 10% en poids de liqueur, et procédé au séchage du produit enrobé comme indiqué ci-dessus. D'autres essais d'enrobage ont montré que des résultats satisfaisants pouvaient être obtenus par l'emploi de 0,5 à 10% en poids de ligueur par portion (poids) de bicarbonate ou d'acide.

On a finalement préparé une composition pulvérulente de base pour boisson gazeuse en mélangeant 2,30 g de bicarbonate de sodium enrobé et 3,50 g d'acide tartrique enrobé. Après addition d'eau froide, une telle composition permet de libérer du $CO_2$ de manière continue durant près de 30 minutes.

### Exemple B

35 g de sucre pulvérulent ont été progressivement ajoutés, à température ambiante, à 35 g de blanc d'oeuf frais (équivalent à une solution aqueuse d'albumine fraîchement préparée). Au mélange liquide relativement épais ainsi obtenu, on a ensuite incorporé 9 ml d'éthanol et le tout a été entreposé en vase clos durant 1 heure à 50°C.

Après refroidissement, on a ainsi obtenu une masse gélatineuse relativement visqueuse que l'on a utilisée pour l'enrobage d'acide tartrique, respectivement de bicarbonate de sodium, conformément au procédé de l'exemple A.

### Exemple C

On a préparé une solution aqueuse sucrée de gomme xanthane (qualité pour aliments – KELTROL T – commercialisé par KELCO, 20 N. Wacker Dr., Chicago, Ill. 60606, USA) comme suit :
- 4 g gomme xanthane en poudre
- 96 g saccharose pulvérisé
- 50 g d'eau.

Au mélange ci-dessus, on a progressivement ajouté 50 g d'alcool éthylique à 95% et malaxé le tout jusqu'à obtention d'une pâte homogène. Cette pâte a ensuite été placée dans un récipient étanche et chauffée durant 2 h à 50°C, pour donner un gel parfaitement limpide.

Le gel ainsi obtenu a été ensuite utilisé pour l'enrobage du mélange d'acides suivant, à raison de 5 g de gel pour 50 g dudit mélange :
- 3 g acide phosphorique
- 17 g acide citrique anhydre
- 30 g acide tartrique moulu.

Une fois les ingrédients réduits en une masse homogène, le produit résultant a été séché sur un treillis à fines mailles dans un courant d'air chaud et finalement réduit en poudre dans un mortier. Taux d'enrobage : 0,1% en gomme xanthane ; 5% en mélange sucre/gomme après dessication.

Ce mélange d'acides peut être ensuite utilisé pour la préparation d'une composition pulvérulente de base pour boisson gazeuse quantité pour 300 ml):
- 2 g de bicarbonate de sodium enrobé selon un des exemples précédents
- 3 g du mélange d'acides enrobé selon la méthode ci-dessus.

Après addition d'eau froide au mélange ainsi préparé, on observe une effervescence gazeuse régulière, sur 35 min. environ.

Certaines des mises en oeuvre de l'invention sont illustrées à l'aide des exemples ci-après.

### Exemple 1

5 g de gélatine du commerce ont été premièrement dissous à chaud dans env. 25 ml d'eau puis, après refroidissement, progressivement additionnés de 8 ml d'éthanol. Une fois unifié, le mélange obtenu a été entreposé en vase clos durant 1 heure à 50°C.

Le produit résultant peut être ensuite utilisé pour l'enrobage d'acide tartrique ou de bicarbonate de sodium, par exemple, conformément au procédé de l'exemple A.

### Exemple 2

A) 50 g de gomme arabique en poudre et 40 ml d'eau ont été mélangés dans un mortier, à température ambiante, jusqu'à obtention d'un produit homogène. 10 ml d'alcool éthylique à 95% ont ensuite été progressivement ajoutés au mélange ci-dessus et la pâte jaunâtre ainsi obtenue a été chauffée en vase clos durant une heure à 50°C.

B) 40 g de gomme arabique en poudre, 10 g de gomme adragante en poudre et 50 ml d'eau ont été mélangés au mortier, à température ambiante. 10 ml d'alcool éthylique à 95% ont ensuite été ajoutés, progressivement, au mélange ci-dessus et le produit pâteux résultant a été chauffé en vase clos durant une heure à 50°C.

Après refroidissement à température ambiante, on a obtenu, à partir du mélange A aussi bien que du mélange B, des liqueurs d'enrobage limpides.

Celles-ci peuvent être ensuite utilisées pour l'enrobage d'acides, respectivement de carbonates, comme indiqué à l'exemple A.

## Revendications

1. Procédé pour la préparation d'une composition pulvérulente hydrosoluble non hygroscopique destinée à la préparation de boissons à dégagement gageux prolongé comprenant un premier constituant mélangé à un second constituant, réagissant l'un avec l'autre en présence d'eau pour donner un dégagement gazeux, caractérisé en ce que

a) on prépare une solution aqueuse exempte de saccharose ou d'un de ses dérivés d'un composé choisi parmi les polysaccharides ou mélanges de polysaccharides macromoléculaires d'origine végétale ou microbiologique, hydrosolubles mais insolubles ou seulement partiellement solubles dans les alcools, les composés de structure amino-acide, les polypeptides ou mélanges de polypeptide ; hydrosolubles, mais insolubles ou seulement partiellement solubles dans les alcools ;

b) on ajoute progressivement de l'alcool éthylique à la solution ci-dessus en quantités telles que le volume alcool éthylique introduit soit légèrement inférieur à celui provoquant l'apparition de micelles, de gels ou de flocons ;

c) on chauffe le mélange ainsi obtenu dans un récipient étanche durant au moins une heure à une température de l'ordre de 50°C ;

d) on imprègne ou enrobe séparément lesdits premier et second constituants à l'aide de la liqueur résultant de l'étape c) ;

e) on sèche ensuite séparément chacun des constituants ainsi imprégnés ou enrobés, puis

f) on mélange, en proportions prédéterminées, les constituants séchés et le cas échéant pulvérisés.

2. Procédé selon la revendication 1, caractérisé en ce que l'enrobage, respectivement l'imprégnation est effectué par mélange sous pression mécanique du constituant et de la liqueur, le cas échéant étendue d'eau.

3. Procédé selon la revendication 1, caractérisé en ce que l'imprégnation est effectué par dissolution dans l'eau du constituant et de la liqueur.

4. Procédé selon l'une des revendications 1 à 3, caractérisé en ce que le premier constituant comprend un sel ou un mélange de sels d'acide carbonique, tel un carbonate ou un bicarbonate alcalin, un carbonate alcalino-terreux ou un sel d'acide carbonique et d'acide aminé.

5. Procédé selon l'une des revendications 1 à 3, caractérisé en ce que le second constituant comprend un acide ou un mélange d'acides organiques, tel l'acide citrique, tartrique, malique ou ascorbique, et/ou d'un acide minéral tel que l'acide phosphorique.

6. Procédé selon l'une des revendications 1 à 5, caractérisé en ce que les premier et second constituants, respectivement acides et carbonates, sont utilisés sous forme cristallisée ou amorphe, de préférence amorphe.

7. Utilisation d'une composition obtenue selon le procédé de la revendication 1, pour la préparation de boissons à dégagement gazeux prolongé.

## Ansprüche

1. Verfahren zur Herstellung eines feinpulverigen, wasserlöslichen, nichthygroskopischen Gemisches, bestimmt zur Herstellung von Getränken, in denen über längere Zeit Gas freigesetzt wird, wobei dieses Gemisch einen ersten Bestandteil enthält, der mit einem zweiten Bestandteil vermischt ist, und wobei beide miteinander in Gegenwart von Wasser zum Freisetzen des Gases reagieren, dadurch gekennzeichnet, dass

a) eine wässrige Lösung ohne Saccharose oder eines seiner Derivate aus einer Verbindung, ausgewählt aus makromolekularen Polysacchariden oder deren Gemischen pflanzlichen oder mikrobiologischen Ursprungs, zubereitet wird, und wobei diese Polysaccharide oder deren Gemische wasserlöslich sind, in Alkoholen jedoch entweder nur teilweise oder überhaupt nicht löslich sind, und des weiteren ausgewählt aus Verbindungen mit Aminosäurenstruktur, wasserlöslichen Polypeptiden oder deren Gemischen, die in Alkoholen jedoch entweder nur teilweise oder überhaupt nicht löslich sind ;

b) allmählich zur oben angegebenen Lösung Aethylalkohol in einer solchen Menge zugefügt wird, dass das zugefügte Aethylalkoholvolumen etwas kleiner ist als jenes, durch das das Auftreten von Mizellen, Gels oder Flocken bewirkt wird;

c) das so erhaltene Gemisch in einem Dichtgefäss während mindestens einer Stunde auf eine Temperatur in der Grössenordnung von 50°C erwärmt wird,

d) die ersten und zweiten Bestandteile mit Hilfe der im Schritt c) erhaltenen Lösung imprägniert oder umhüllt werden ;

e) anschliessend jeder der so imprägnierten oder umhüllten Bestandteile getrennt getrocknet wird, und sodann

f) die getrockneten und gegebenenfalls pulverisierten Bestandteile in einem vorgegebenen Verhältnis miteinander vermischt werden.

2. Verfahren nach Patentanspruch 1, dadurch gekennzeichnet, dass das Umhüllen beziehungsweise Imprägnieren durchgeführt wird durch Mischen unter mechanischem Druck des Bestandteiles und der gegebenenfalls mit Wasser verdünnten Flüssigkeit.

3. Verfahren nach Patentanspruch 1, dadurch gekennzeichnet, dass das Imprägnieren durch Auflösen des Bestandteils und der Lösung in Wasser durchgeführt wird.

4. Verfahren nach einem der Patentansprüche 1 bis 3, dadurch gekennzeichnet, dass im ersten Bestandteil ein Kohlensäuresalz oder ein Gemisch derartiger Salze, wie ein Karbonat oder ein alkalisches Bikarbonat, ein erdalkalisches Karbonat oder ein Kohlensäurensalz und ein Aminosäurensalz enthalten ist.

5. Verfahren nach einem der Patentansprüche 1 bis 3, dadurch gekennzeichnet, dass im zweiten Bestandteil eine organische Säure oder ein Gemisch derartiger Säuren, wie Zitronensäure, Weinsäure, Hydroxybernsteinsäure oder Ascorbinsäure, und-/oder eine mineralische Säure wie Phosphorsäure enthalten sind/ist.

6. Verfahren nach einem der Patentansprüche 1 bis 5, dadurch gekennzeichnet, dass der erste und zweite Bestandteil, beziehungsweise Säuren und Karbonate, in kristalliner oder amorpher Form, vorzugsweise jedoch in amorpher Form, verwendet werden.

7. Verwendung eines gemäss dem Verfahren nach Patentanspruch 1 erhaltenen Gemisches zur Zubereitung von Getränken, die während längerer Zeit Gas freisetzen.

## Claims

1. A process for the preparation of a non-hygroscopic water-soluble pulverulent composition for the preparation of drinks which release gas over a prolonged period, said composition comprising a mixture of a first constituent and a second constituent which react with one another in the presence of water to release gas, characterized in that

a) an aqueous solution, free from sucrose or one of its derivatives, of a compound selected from macromolecular polysaccharides of vegetable or microbiological origin, or mixtures thereof, which are soluble in water but insoluble or only partially soluble in alcohols, compounds having an amino acid structure and polypeptides, or mixtures thereof, which are soluble in water but insoluble or only partially soluble in alcohols, is prepared ;

b) ethyl alcohol is added gradually to the above solution in quantities such that the volume of ethyl alcohol introduced is slightly less than that which causes micelles, gels or flakes to appear ;

c) the resulting mixture is heated in a leak-tight container for at least one hour at a temperature of the order of 50°C ;

d) said first and second constituents are separately impregnated or coated with the liquor resulting from step c) ;

e) each of the constituents impregnated or coated in this way is then separately dried ; and

f) the dried and, if appropriate, powdered constituents are then mixed in predetermined proportions.

2. A process according to Claim 1, characterized in that the coating or impregnation is carried out by mixing the constituent and the liquor under mechanical pressure, said liquor being diluted with water if appropriate.

3. A process according to Claim 1, characterized in that the impregnation is carried out by dissolution of the constituent and the liquor in water.

4. A process according to any one of Claims 1 to 3, characterized in that the first constituent comprises a carbonic acid salt such as an alkali metal carbonate or bicarbonate, an alkaline earth metal carbonate or a salt of carbonic acid and an amino acid, or a mixture of such salts.

5. A process according to any one of Claims 1 to 3, characterized in that the second constituent comprises an organic acid such as citric, tartaric, malic or ascorbic acid, and/or a mineral acid such as phosphoric acid, or a mixture of such acids.

6. A process according to any one of Claims 1 to 5, characterized in that the first and second constituents, namely the carbonates and acids respectively, are used in the crystalline or, preferably, amorphous form.

7. Use of a composition obtained by the process of Claim 1, for the preparation of drinks which release gas over a prolonged period.